(19) Europäisches Patentamt
European Patent Office
Office européen des brevets

(11) **EP 4 037 799 B1**

(12) **EUROPÄISCHE PATENTSCHRIFT**

(45) Veröffentlichungstag und Bekanntmachung des Hinweises auf die Patenterteilung:
**01.05.2024   Patentblatt 2024/18**

(21) Anmeldenummer: **20775842.6**

(22) Anmeldetag: **17.09.2020**

(51) Internationale Patentklassifikation (IPC):
**B01D 19/00** (2006.01)      **B01D 63/08** (2006.01)

(52) Gemeinsame Patentklassifikation (CPC):
**B01D 19/0031; B01D 61/10; B01D 63/08;**
B01D 2311/2657; B01D 2315/10; B01D 2315/16

(86) Internationale Anmeldenummer:
**PCT/EP2020/075983**

(87) Internationale Veröffentlichungsnummer:
**WO 2021/063690 (08.04.2021 Gazette 2021/14)**

(54) **VERFAHREN ZUM ENTLÜFTEN EINER QUERSTROMDIAFILTRATIONSEINHEIT, QUERSTROMDIAFILTRATIONSVERFAHREN UND QUERSTROMDIAFILTRATIONSEINHEIT**

METHOD FOR DEGASSING A CROSS-FLOW DIAFILTRATION UNIT, CROSS-FLOW DIAFILTRATION METHOD AND CROSS-FLOW DIAFILTRATION UNIT

PROCÉDÉ DE DÉGAZAGE D'UNE UNITÉ DE DIAFILTRATION TANGENTIELLE, PROCÉDÉ DE DIAFILTRATION TANGENTIELLE ET UNITÉ DE DIAFILTRATION TANGENTIELLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.09.2019   DE 102019006817**

(43) Veröffentlichungstag der Anmeldung:
**10.08.2022   Patentblatt 2022/32**

(73) Patentinhaber: **Sartorius Stedim Biotech GmbH 37079 Göttingen (DE)**

(72) Erfinder:
• **LEUTHOLD, Martin**
  **37079 Göttingen (DE)**
• **HELLING, Alexander**
  **37079 Göttingen (DE)**
• **GENCOGLU, Ceren**
  **37079 Göttingen (DE)**

(74) Vertreter: **Novagraaf International SA
Chemin de l'Echo 3
1213 Onex, Geneva (CH)**

(56) Entgegenhaltungen:
**DE-A1-102016 004 115     US-A1- 2005 258 100**

**Beschreibung**

Die vorliegende Erfindung betrifft ein Verfahren zum Entlüften einer Querstromdiafiltrationseinheit, ein Querstromdiafiltrationsverfahren sowie eine Querstromdiafiltrationseinheit.

Querstromdiafiltrationseinheiten sowie Querstromdiafiltrationsverfahren sind im Stand der Technik bekannt (siehe beispielsweise US 2005/258100 A1 und DE 10 2016 004 115 A1). Der Diafiltrationsspalt einer Querstromdiafiltrationseinheit ist ein geschlossener Spalt (Kanal), d. h. er wird baulich zum Retentatspalt durch ein erstes Filtermaterial (beispielsweise eine Filtrationsmembran) abgegrenzt und hat üblicherweise einen Einlass, jedoch keinen Auslass. In diesem Zusammenhang offenbart die US 2005/258100 A1 eine Auftrennung auf Basis einer Membrankaskade.

Auf verschiedenen Wegen können ungewollt Luftblasen in den Diafiltrationsspalt eingebracht werden, beispielsweise durch vorgeschaltete Pumpen. Für gewöhnlich ist das erste Filtermaterial jedoch nicht permeabel für Luftblasen. Die Luftblasen verbleiben daher im normalen Betrieb im Diafiltrationsspalt der Querstromdiafiltrationseinheit und führen dazu, dass die für den Übergang des Diafiltrationsmediums in den Retentatspalt verfügbare Fläche des ersten Filtermaterials verringert wird. Somit kann durch im Diafiltrationsspalt eingeschlossene Luftblasen die Funktionalität der Querstromdiafiltrationseinheit bzw. die Effizienz eines Querstromdiafiltrationsverfahrens herabgesetzt werden, was sich beispielsweise in einem geringen Abreicherungseffekt (Aufreinigungseffekt) bemerkbar machen kann. Weiterhin erhöht sich durch die geringere zur Verfügung stehende Fläche des Filtermaterials der Druck im Diafiltrationsspalt, wodurch unter Umständen aufgrund eines Überschreitens des zulässigen maximalen Betriebsdruckes der Querstromdiafiltrationseinheit ein verfrühter Filtrationsabbruch erforderlich werden kann.

Der vorliegenden Erfindung liegt die Aufgabe zugrunde, ein effizientes Verfahren zum Entlüften einer Querstromdiafiltrationseinheit und ein Querstromdiafiltrationsverfahren, umfassend das Verfahren zum Entlüften, sowie eine effizient entlüftbare Querstromdiafiltrationseinheit bereitzustellen.

Die vorstehende Aufgabe wird durch die in den Ansprüchen gekennzeichneten Ausführungsformen gelöst.

In einem ersten Aspekt betrifft die vorliegende Erfindung ein Verfahren zum Entlüften einer Querstromdiafiltrationseinheit, umfassend die Schritte in der angegebenen Reihenfolge (i) Bereitstellen einer Querstromdiafiltrationseinheit mit Diafiltrationsspalt, Retentatspalt und Permeatspalt, wobei ein erstes Filtermaterial den Diafiltrationsspalt und den Retentatspalt voneinander abgrenzt und ein zweites Filtermaterial den Retentatspalt und den Permeatspalt voneinander abgrenzt; und (ii) Zuführen einer Flüssigkeit in den Retentatspalt, so dass die Flüssigkeit in einer Flussrichtung durch den Retentatspalt strömt und durch das erste Filtermaterial in den Diafiltrationsspalt dringt, um den Retentatspalt und den Diafiltrationsspalt mit der Flüssigkeit zu befüllen und zu entlüften, und (iii) Zuführen der Flüssigkeit in den Retentatspalt und in den Diafiltrationsspalt, so dass die Flüssigkeit aus dem Diafiltrationsspalt in den Retentatspalt und aus dem Retentatspalt in den Permeatspalt dringt, wobei die in Schritt (i) bereitgestellte Querstromdiafiltrationseinheit eine Pumpe aufweist, der Diafiltrationsspalt fluidleitend mit der Pumpe verbunden ist und die Pumpe in zwei Richtungen betrieben werden kann, der Retentatspalt fluidleitend mit mindestens einem Einlass für eine Speiseflüssigkeit und mit mindestens einem Auslass für das Retentat verbunden ist, die Querstromdiafiltrationseinheit weiter eine Speiseflüssigkeitspumpe oder ein Ventil zum Zuführen der Speiseflüssigkeit aufweist; und in Schritt (ii) die Flüssigkeit von der Pumpe aus dem Diafiltrationsspalt gepumpt wird.

Durch das erfindungsgemäße Entlüftungsverfahren können gegebenenfalls im Diafiltrationsspalt der Querstromdiafiltrationseinheit befindliche Luftblasen zuverlässig entfernt werden. Aufgrund seiner einfachen Ausgestaltung erfordert das erfindungsgemäße Entlüftungsverfahren für seine Durchführung nur einen geringen Aufwand und kann daher in bestehende Querstromdiafiltrations-Prozessabläufe integriert werden. Ein weiterer Vorteil des erfindungsgemäßen Entlüftungsverfahrens besteht darin, dass es automatisiert werden kann.

Die in dem erfindungsgemäßen Verfahren verwendete Querstromdiafiltrationseinheit unterliegt keiner besonderen Einschränkung. Insbesondere können damit die in DE 10 2016 004 115 A1 beschriebenen Querstromdiafiltrationseinheiten (Crossflow-Filtrationseinheit zur kontinuierlichen Diafiltration) auf effiziente Weise entlüftet werden.

Gemäß der vorliegenden Erfindung umfasst die Querstromdiafiltrationseinheit mindestens einen Diafiltrationsspalt, ein erstes (vorzugsweise flächiges) Filtermaterial, einen Retentatspalt, ein zweites (vorzugsweise flächiges) Filtermaterial und einen Permeatspalt, derart angeordnet, dass das erste Filtermaterial den Diafiltrationsspalt und den Retentatspalt voneinander abgrenzt und das zweite Filtermaterial den Retentatspalt und den Permeatspalt voneinander abgrenzt. Der Retentatspalt ist fluidleitend mit mindestens einem Einlass für eine Speiseflüssigkeit und mit mindestens einem Auslass für das Retentat verbunden. Vorzugsweise ist der Diafiltrationsspalt fluidleitend mit mindestens einem Einlass für das Diafiltrationsmedium und der Permeatspalt fluidleitend mit mindestens einem Auslass für das Permeat verbunden.

Die hier bezeichneten Ein- und Auslässe betreffen jeweils nur einen Diafiltrations-, Retentat- sowie Permeatspalt der Diafiltrationsvorrichtung. In anderen Worten ist jedem der Ein- und Auslässe jeweils ein einziger Spalt (Diafiltrations-, Rententat-, Permeatspalt) zugeordnet. Es handelt sich bei den Ein- und Auslässen also nicht um Versorgungskanäle, welche die gesamte Diafiltrationseinheit (mit möglicherweise mehreren Spalten gleicher Art) versorgen, sondern um Ein-/Auslässe von jeweils einem Spalt.

Die Form (räumliche Gestalt) des ersten und zweiten Filtermaterials unterliegt keiner besonderen Einschränkung.

Vorzugsweise sind das erste und zweite Filtermaterial ein erstes flächiges Filtermaterial sowie ein zweites flächiges Filtermaterial, sodass die Querstromdiafiltrationseinheit als Flachfiltermodul vorliegt. Der Begriff "flächig" zeigt an, dass das jeweilige Filtermaterial im Wesentlichen in einer einzigen Ebene liegt. Vorzugsweise liegen alle Filtermaterialien der Querstromdiafiltrationseinheit im Wesentlichen in Ebenen, die weitgehend parallel zueinander sind.

Daneben kann die Querstromdiafiltrationseinheit ein Wickelmodul sein. Hierzu wird eine zunächst flache bzw. flächige Anordnung von erstem und zweitem Filtermaterial um einen Kern gewickelt, sodass erstes und zweites Filtermaterial (sowie Diafiltrations-, Retentat- und Permeatspalt) jeweils einen spiralförmigen Querschnitt aufweisen.

Darüber hinaus kann die Querstromdiafiltrationseinheit ein Hohlfasermodul sein. In diesem Fall weisen das erste und zweite Filtermaterial eine Hohlfaserform (Zylinder ohne kreisscheibenförmige Endabschnitte) auf. Die Innendurchmesser des ersten und zweiten Hohlfaser-Filtermaterials sind verschieden, damit das erste bzw. zweite Filtermaterial in das zweite bzw. erste Filtermaterial eingeschoben werden kann, um den Diafiltrations-, Retentat- und Permeatspalt auszubilden.

Sofern hier von einem Zuführen in den Retentatspalt die Rede ist, erfolgt dies vorzugsweise über den Einlass für die Speiseflüssigkeit. Gleichermaßen erfolgt das Abführen aus dem Retentatspalt vorzugsweise über den Auslass für das Retentat. Das Abführen aus dem Permeatspalt erfolgt vorzugsweise über den Auslass für das Permeat. Was den Diafiltrationsspalt betrifft, erfolgen sowohl das Abführen (der Flüssigkeit im Entlüftungsverfahren) als auch das Zuführen (des Diafiltrationsmediums im Querstromdiafiltrationsverfahren) über den Einlass für das Diafiltrationsmedium.

Weiterhin ist es bevorzugt, dass die Porengröße bzw. die Molekulargewichtsausschlussgrenze des ersten Filtermaterials mindestens so groß wie die Porengröße bzw. die Molekulargewichtsausschlussgrenze des zweiten Filtermaterials ist. Zudem ist die Porengröße bzw. die Molekulargewichtsausschlussgrenze des ersten Filtermaterials bevorzugt größer als die Porengröße bzw. die Molekulargewichtsausschlussgrenze des zweiten Filtermaterials. Zudem ist es bevorzugt, dass die Durchflussrate des ersten Filtermaterials höher ist als die Durchflussrate des zweiten Filtermaterials. Hierzu werden die beiden Durchflussraten unter gleichen Bedingungen bestimmt, abgesehen von dem verwendeten Filtermaterial. Die Bestimmung der Durchflussraten kann beispielsweise mit Wasser bei einem vorbestimmten Druck erfolgen.

Gemäß einer bevorzugten Ausführungsform der vorliegenden Erfindung weist das erste Filtermaterial einen Molekulargewichtsausschlussgrenze (molecular weight cut-off, MWCO) im Bereich von 5 kDa bis 1500 kDa auf. Das zweite Filtermaterial weist vorzugsweise eine Molekulargewichtsausschlussgrenze im Bereich von 1 kDa bis 1500 kDa auf. Die Bestimmung der Molekulargewichtsausschlussgrenze kann gemäß US-Standard ASTM E1343-90 ("Standard test method for molecular weight cut-off evaluation of flat sheet ultrafiltration membranes") erfolgen.

Das erste Filtermaterial weist vorzugsweise eine Porengröße von 0,01 bis 50 $\mu$m, besonders bevorzugt 0,01 bis 0,5 $\mu$m auf. Das zweite Filtermaterial weist vorzugsweise eine Porengröße von weniger als 0,01 $\mu$m auf.

Zur Bestimmung der Porengröße wird erfindungsgemäß bei Porengrößen von mindestens 0,1 $\mu$m, d. h. für Mikrofiltrationsmembranen mit einer mittleren Porengröße von 0,1 bis 10 $\mu$m, die Kapillarfluss-Porometrie verwendet. Hierbei handelt es sich um eine Gas/Flüssigkeits-Porosimetrie, bei der die differentiellen Gasdrücke und Flussraten durch eine Membranprobe zuerst im feuchten und anschließend im trockenen Zustand gemessen werden. Die Membranprobe wird vor der Messung mit einer benetzenden Flüssigkeit so in Kontakt gebracht, dass sämtliche vorhandenen Poren mit dieser Flüssigkeit gefüllt sind. Nach dem Füllen der Poren und dem Einbringen der Probe ist die Messzelle zu verschließen und die Messung zu starten. Der Gasdruck wird nach dem Start der Messung automatisch und schrittweise erhöht und die dem anliegenden Druck entsprechenden Porendurchmesser werden durch den Gasdruck entleert. Dies erfolgt solange, bis der relevante Porenbereich erfasst wurde, d. h. bis auch die kleinsten im Messbereich vorhandenen Poren von der Flüssigkeit befreit sind. Danach wird der Druck wieder abgesenkt und die Messung an der nun trockenen Probe automatisch wiederholt. Aus der Differenz beider Druck-Flussrate-Kurven wird die Porengrößenverteilung über die Young-Laplace-Gleichung berechnet (s. auch A. Shrestha, "Characterization of porous membranes via porometry", 2012, Mechanical Engineering Graduate Theses & Dissertations, Paper 38, University of Colorado at Boulder).

Zur Bestimmung von Porengrößen von mehr als 10 $\mu$m bis 1 mm kann das in Journal of Membrane Science 372 (2011), Seiten 66 bis 74, beschriebene, auf Bildanalyse (image analysis) beruhende Verfahren verwendet werden.

Bei Porengrößen von weniger als 0,1 $\mu$m wird erfindungsgemäß die Flüssig-Flüssig-Verdrängungsmethode angewendet. Diese weist Ähnlichkeiten zur Kapillarfluss-Porometrie auf. Allerdings werden hier nicht die Gasflussraten, sondern die Flussraten der verdrängenden Flüssigkeit in Abhängigkeit der differentiellen Druckerhöhung gemessen (s. auch R. Dávila, "Characterization of ultra and nanofiltration commercial filters by liquid-liquid displacement porosimetry", 2013).

Gemäß einer bevorzugten Ausführungsform der vorliegenden Erfindung ist das erste Filtermaterial eine erste Filtrationsmembran, oder das zweite Filtermaterial ist vorzugsweise eine zweite Filtrationsmembran. Besonders bevorzugt ist das erste Filtermaterial eine erste Filtrationsmembran und das zweite Filtermaterial ist eine zweite Filtrationsmembran.

Als erstes Filtermaterial ist insbesondere eine poröse Membran im Ultrafiltrations- und Mikrofiltrations-Bereich geeignet. Als zweites Filtermaterial kann vorteilhaft eine Ultrafiltrationsmembran eingesetzt werden. Durch diese Ausgestaltung kann im später beschriebenen Querstromdiafiltrationsverfahren mittels geeigneter Druckbeaufschlagung eine bestimmte Menge an Diafiltrationsmedium für eine optimale Diafiltration in den Diafiltrationsspalt eingebracht werden und im Entlüftungsverfahren durch Druckbeaufschlagung die Flüssigkeit vom Retentatspalt in den Diafiltrationsspalt eingebracht werden.

Die Ultrafiltrationsmembranen sind durch Porengrößen von kleiner als 0,01 $\mu$m gekennzeichnet, beziehungsweise durch Molekulargewichtsausschlussgrenzen charakterisiert, die etwa im Molmassenbereich von 5 bis 1500 kDa liegen, während die Mikrofiltrationsmembranen Porengrößen im Bereich von 0,01 bis 50 $\mu$m, vorzugsweise von 0,01 bis 0,5 $\mu$m, beziehungsweise Molekulargewichtsausschlussgrenzen von 30 bis 1500 kDa aufweisen. Die Filtrationsmembranen können beispielsweise aus Polyvinylidenfluorid, Cellulose und deren Derivaten, Polyethersulfon oder Polysulfon bestehen, wobei vernetztes Cellulosehydrat besonders bevorzugt ist.

Vorzugsweise ist der Einlass für die Speiseflüssigkeit in einem ersten Randbereich der Querstromdiafiltrationseinheit angebracht und der Auslass für das Retentat in einem zweiten Randbereich der Querstromdiafiltrationseinheit, welcher dem ersten Randbereich gegenüberliegt, angebracht. Durch diese Anordnung wird im Entlüftungsverfahren/Querstromdiafiltrationsverfahren eine weitgehend einheitliche Flussrichtung der Flüssigkeit / des Retentats vom Einlass für die Speiseflüssigkeit als Startpunkt zum Auslass für das Retentat als Endpunkt definiert. Die Flussrichtung der Flüssigkeit / des Retentats erfolgt dadurch weitgehend parallel zum Strömungsweg entlang des (flächigen) Filtermaterials, das heißt im Wesentlichen ohne Umlenkungen, wodurch ein stabiler und zuverlässiger Fluss der Flüssigkeit / des Retentats durch die Querstromdiafiltrationseinheit gewährleistet werden kann. Zudem können durch den weitgehend geradlinigen Strömungsverlauf ohne Umlenkungen, Schleifen oder ähnlichem der Druckabfall in der Filtrationseinheit sowie unerwünschte Einwirkungen nicht geradliniger Strömungen auf in der Speiseflüssigkeit enthaltene Zielsubstanzen minimiert werden.

Aus den vorstehenden Gründen ist zudem bevorzugt, dass der Einlass für das Diafiltrationsmedium im zweiten Randbereich der Querstromdiafiltrationseinheit angebracht ist. Es ist allerdings auch möglich, den Einlass für das Diafiltrationsmedium im ersten Randbereich anzubringen, beziehungsweise im dritten und/oder vierten Randbereich. Die Querstromdiafiltrationseinheit weist keinen Auslass für das Diafiltrationsmedium auf. In einer Querstromdiafiltration verlässt das Diafiltrationsmedium den Diafiltrationsspalt nur über das erste Filtermaterial. Daher ist in den vorstehenden bevorzugten Ausführungsformen der mindestens eine Einlass für das Diafiltrationsmedium bevorzugt nicht in gegenüberliegenden Randbereichen angeordnet. Noch bevorzugter ist der mindestens eine Einlass für das Diafiltrationsmedium ausschließlich in einem der Randbereiche angeordnet, ohne dass ein Einlass für das Diafiltrationsmedium in einem der anderen Randbereiche angeordnet ist.

Gemäß einer bevorzugten Ausgestaltung der Erfindung ist der Auslass für das Permeat im zweiten Randbereich der Querstromdiafiltrationseinheit angebracht. Besonders bevorzugt ist sowohl im ersten als auch im zweiten Randbereich der Querstromdiafiltrationseinheit jeweils mindestens ein Auslass für das Permeat angebracht. In einer weiteren Ausgestaltung der Erfindung sind die Auslässe für das Permeat alternativ oder ergänzend im dritten und/oder vierten Randbereich der Querstromdiafiltrationseinheit angebracht. Der dritte Randbereich befindet sich bei einer Draufsicht auf die Querstromdiafiltrationseinheit von der Seite des Diafiltrationsspaltes auf der linken Seite der Flussrichtung. Der vierte Randbereich befindet sich entsprechend auf der rechten Seite und liegt somit dem dritten Randbereich gegenüber. Durch vorstehende Anordnung des Auslasses oder der Auslässe können eine besonders hohe Permeatleistung erzielt und konstruktionstechnische Vorteile erreicht werden.

Vorzugsweise umfasst der erste Randbereich das äußere Drittel der Länge der Filtrationseinheit entgegen der Flussrichtung. Entsprechend umfasst der zweite Randbereich das äußere Drittel der Länge der Filtrationseinheit entlang der Flussrichtung. Entsprechendes gilt für die dritten und vierten Randbereiche. Es ist von Vorteil, die ersten bis vierten Randbereiche so klein wie möglich zu gestalten. Daher umfassen die Randbereiche besonders bevorzugt die jeweiligen äußeren 20%, noch mehr bevorzugt die jeweiligen äußeren 10% und am meisten bevorzugt die jeweiligen äußeren 3%.

Grundsätzlich besteht hinsichtlich der Anbringung der Ein- und Auslässe keine besondere Einschränkung. Zum Beispiel können die Ein- und Auslässe so angebracht sein, dass die Speiseflüssigkeit bereits in Flussrichtung in den Retentatspalt eintritt und ihn in Flussrichtung verlässt. Entsprechend kann der Auslass für das Permeat so angebracht sein, dass das Permeat den Permeatspalt in Flussrichtung verlässt und/oder der Einlass für das Diafiltrationsmedium kann so angebracht sein, dass es in Flussrichtung in den Diafiltrationsspalt eintritt. Vorzugsweise sind die Ein- und Auslässe jedoch so angebracht, dass das Diafiltrationsmedium senkrecht zur Flussrichtung in den Diafiltrationsspalt eintritt und die (Speise)flüssigkeit zunächst senkrecht zur Flussrichtung in den Retentatspalt eintritt und diesen senkrecht zur Flussrichtung als Retentat verlässt. Eine derartige Anbringung der Ein- und Auslässe erleichtert die Anordnung einer Mehrzahl der erfindungsgemäßen Filtrationseinheiten zu einer Filterkassette.

Vorzugsweise weist die Querstromdiafiltrationseinheit mehrere Einlässe für die (Speise)flüssigkeit, mehrere Auslässe für das Retentat und mehrere Auslässe für das Permeat auf.

Die im erfindungsgemäßen Schritt (ii) in den Retentatspalt zugeführte Flüssigkeit unterliegt erfindungsgemäß keiner besonderen Einschränkung. Erfindungsgemäß kann die Flüssigkeit von Schritt (ii) ein Lösungsmittel sein. Das Lösungsmittel kann beispielsweise ein organisches Lösungsmittel oder ein Gemisch mehrerer organischer Lösungsmittel sein. Darüber hinaus kann die Flüssigkeit von Schritt (ii), gegebenenfalls zusätzlich zu einem oder mehreren organischen Lösungsmitten, Wasser enthalten. Gemäß einer bevorzugten Ausführungsform der vorliegenden Erfindung enthält die Flüssigkeit von Schritt (ii) ein wässriges Lösungsmittel. Es ist besonders bevorzugt, dass die Flüssigkeit von Schritt (ii) Wasser oder einen wässrige Pufferlösung ist. Geeignete Puffer sind beispielsweise Tris-HCl-Puffer, Kaliumphosphat (KPi)-Puffer etc.

Schritt (ii) des erfindungsgemäßen Entlüftungsverfahrens (sowie auch Schritt (iv) des nachstehend beschriebenen erfindungsgemäßen Querstromdiafiltrationsverfahrens) kann beispielsweise mithilfe einer Pumpe, welche fluidleitend mit dem Einlass für die Speiseflüssigkeit (Speiseflüssigkeitszuführpumpe), erfolgen.

In Schritt (ii) des erfindungsgemäßen Entlüftungsverfahrens wird üblicherweise zunächst der Retentatspalt mit der Flüssigkeit befüllt. Eventuell im Retentatspalt enthaltene Luft verlässt den Retentatspalt über den mindestens einen Auslass für das Retentat. Nachdem der Retentatspalt vollständig mit der Flüssigkeit befüllt ist, kann, beispielsweise durch Druckbeaufschlagung (Überdruck im Retentatspalt) bzw. Anwenden von Vakuum ("Saugen" am Einlass für das Diafiltrationsmedium, am Retentatauslass und/oder am Permeatauslass), die Flüssigkeit durch das erste Filtermaterial in den Diafiltrationsspalt dringen, wodurch gegebenenfalls im Diafiltrationsspalt enthaltene Luft bzw. Luftblasen ausgetragen werden können. Die Druckbeaufschlagung kann beispielsweise mithilfe eines Ventils oder einer Pumpe erfolgen. Gemäß einer bevorzugten Ausführungsform ist am Auslass für das Retentat ein Ventil angebracht (Retentatauslassventil), sodass eine Druckbeaufschlagung durch Schließen dieses Ventils erfolgen kann. Das Ventil kann beispielsweise ein Dosierventil oder ein Quetschventil sein. Gemäß einer anderen bevorzugten Ausführungsform ist am Auslass für das Retentat eine Pumpe angebracht (Retentatabführpumpe), sodass eine Druckbeaufschlagung durch geeignete Regelung dieser Pumpe erfolgen kann.

Erfindungsgemäß kann vor Schritt (ii) zunächst in einem optionalen Schritt (ii') der Retentatspalt mit der Flüssigkeit befüllt werden. Hierbei ist der Volumenstrom der Flüssigkeit, die in den Retentatspalt zugeführt (eingeleitet) wird, vorzugsweise mindestens so groß, besonders bevorzugt größer als der Volumenstrom der Flüssigkeit, die vom Retentatspalt abgeführt wird. Insbesondere bevorzugt beträgt der Volumenstrom der Flüssigkeit, die in den Retentatspalt zugeführt (eingeleitet) wird, mindestens 18 Lm$^{-2}$h$^{-1}$ und der Volumenstrom der Flüssigkeit, die vom Retentatspalt abgeführt wird, mindestens 10 Lm-2h-'. Die Dauer von Schritt (ii') beträgt bevorzugt 10 Sekunden bis 5 Minuten, besonders bevorzugt 1 bis 3 Minuten. Durch Schritt (ii') kann eine noch wirksamere Entlüftung des Diafiltrationsspalts in Schritt (ii) gewährleistet werden.

Gemäß einer bevorzugten Ausführungsform der vorliegenden Erfindung nimmt in Schritt (ii) (sowie gegebenenfalls in Schritt (ii')) die Flussrichtung der Flüssigkeit im Retentatspalt einen Winkel von mehr als 90° zur Richtung der Schwerkraft ein, vorzugsweise mehr als 120°, besonders bevorzugt mehr als 160°, beispielsweise 180°. Bildlich gesprochen fließt in dieser bevorzugten Ausführungsform die Flüssigkeit im Retentatspalt zumindest teilweise "nach oben". Der vorstehende Winkel kann beispielsweise als ein Winkel zwischen zwei Vektoren aufgefasst werden, nämlich als der Winkel zwischen dem Kraftvektor der Schwerkraft und dem Vektor, der die Flussrichtung der Flüssigkeit im Retentatspalt angibt.

Zudem ist erfindungsgemäß bevorzugt, dass in Schritt (ii) die Flussrichtung der Flüssigkeit im Retentatspalt einen Winkel von weniger als 90° zur Richtung der Schwerkraft einnimmt, vorzugsweise weniger als 60°, besonders bevorzugt weniger als 30°, beispielsweise 0°. Bildlich gesprochen fließt in dieser bevorzugten Ausführungsform die Flüssigkeit zumindest teilweise "nach unten".

Die beiden vorstehenden bevorzugten Ausführungsformen können miteinander kombiniert werden. Das heißt, die Flussrichtung kann teilweise einen Winkel von mehr als 90° und teilweise einen Winkel von weniger als 90° zur Flussrichtung der Flüssigkeit im Retentatspalt einnehmen.

Weiterhin ist es erfindungsgemäß bevorzugt, dass das erste flächige Filtermaterial in Schritt (ii) in einer Ebene angeordnet wird, deren Normale nicht kollinear mit der Richtung der Schwerkraft ist. Besonders bevorzugt beträgt der Winkel zwischen der Normalen und der Richtung der Schwerkraft mindestens 30°, vorzugsweise mindestens 60°, besonders bevorzugt 90°. Besonders bevorzugt wird das erste flächige Filtermaterial so angeordnet, dass in einer Höhenrichtung, welche entgegen der Richtung der Schwerkraft verläuft, der Einlass für das Diafiltrationsmedium eine möglichst hohe Position einnimmt. Das heißt, der Bereich des Diafiltrationsspalts in der Umgebung des Einlasses für das Diafiltrationsmedium sollte höher liegen als der restliche Bereich des Diafiltrationsspalts. Durch diese Anordnung können im Diafiltrationsspalt befindliche Luftblasen besonders einfach entweichen.

Durch vorstehend beschriebene bevorzugte Ausführungsformen, in denen das erste flächige Filtermaterial "schräg" angeordnet ist, wird das Entlüften in Schritt (ii) besonders erleichtert, da Luftblasen besonders einfach entweichen können.

Gemäß der vorliegenden Erfindung weist die in Schritt (i) bereitgestellte Querstromdiafiltrationseinheit eine Pumpe auf, wobei der Diafiltrationsspalt fluidleitend mit der Pumpe verbunden ist und die Pumpe in zwei Richtungen betrieben werden kann. Diese Pumpe wird hier als Diafiltrationspumpe bezeichnet. Gemäß der vorliegenden Erfindung wird in Schritt (ii) die Flüssigkeit von der Pumpe aus dem Diafiltrationsspalt gepumpt.

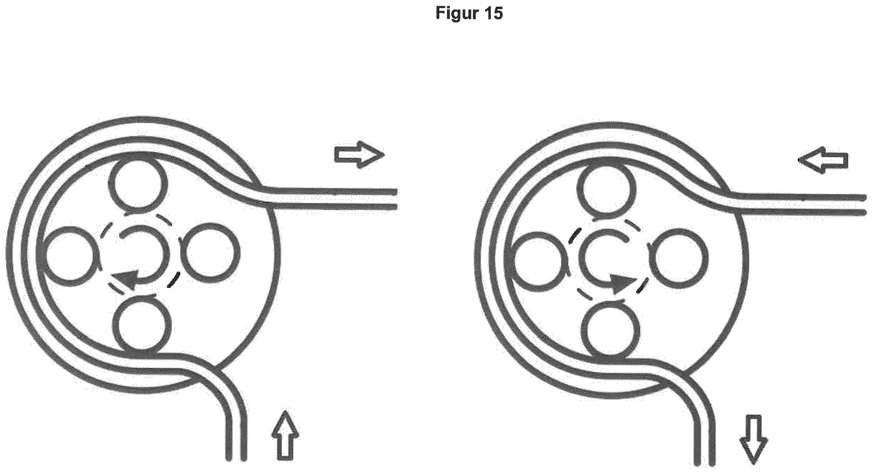

Die mit dem Diafiltrationsspalt fluidleitend verbundene Pumpe (Diafiltrationspumpe) unterliegt erfindungsgemäß keiner besonderen Einschränkung, solange sie in zwei Richtungen betrieben werden kann. Wird mit der Querstromdiafiltrationseinheit ein Querstromdiafiltrationsverfahren durchgeführt, kann mit der Diafiltrationspumpe das Diafiltrationsmedium in den Diafiltrationsspalt zugeführt werden. Im erfindungsgemäßen Entlüftungsverfahren wird die vorhandene Diafiltrationspumpe in der entgegengesetzten Richtung betrieben (siehe z. B. Figur 15), um die Flüssigkeit aus dem Diafiltrationsspalt zu pumpen und gegebenenfalls darin enthaltene Luftblasen abzuführen. Als Diafiltrationspumpe geeignet sind beispielsweise Schlauchpumpen, Membrandosierpumpen und Druckbehälter. (Ein mit Flüssigkeit befüllter Druckbehälter kann beispielsweise mit Druckluft (oder anderen Gasen) beaufschlagt werden oder an den Behälter wird ein Vakuum angelegt (Umkehr der Flussrichtung). Mit einem Druckbehälter kann in vorteilhafter Weise ein pulsationsfreier Fluidstrom eingestellt werden.) Mithilfe der Diafiltrationspumpe, die in beiden Richtungen betreibbar ist, kann das erfindungsgemäße Entlüftungsverfahren besonders schnell und zuverlässig durchgeführt werden.

In einer weiteren bevorzugten Ausführungsform der vorliegenden Erfindung wird in Schritt (ii) die Flüssigkeit so in den Retentatspalt zugeführt, dass die Flüssigkeit durch das erste Filtermaterial in den Diafiltrationsspalt und durch das zweite Filtermaterial in den Permeatspalt dringt, um den Retentatspalt, den Diafiltrationsspalt und den Permeatspalt mit der Flüssigkeit zu befüllen und zu entlüften. Durch diese bevorzugte Ausführungsform kann nicht nur der Diafiltrationsspalt, sondern auch der Permeatspalt entlüftet werden.

In einer bevorzugten Ausführungsform der vorliegenden Erfindung ist in Schritt (ii) der Volumenstrom der Flüssigkeit, die in den Retentatspalt zugeführt wird, größer als der Volumenstrom der Flüssigkeit, die vom Diafiltrationsspalt abgeführt wird. Darüber hinaus ist bevorzugt, dass der Volumenstrom der Flüssigkeit, die vom Diafiltrationsspalt abgeführt wird, größer ist als der Volumenstrom der Flüssigkeit, die vom Retentatspalt abgeführt wird. Gemäß dieser bevorzugten Ausführungsform durchströmt ein hoher Anteil der dem Retentatspalt zugeführten Flüssigkeit den Diafiltrationsspalt, so dass auf besonders effiziente Weise entlüftet wird.

Es ist erfindungsgemäß besonders bevorzugt, dass in Schritt (ii) der Volumenstrom der Flüssigkeit, die in den Retentatspalt zugeführt wird, mindestens 18 $Lm^{-2}h^{-1}$ beträgt; der Volumenstrom der Flüssigkeit, die von dem Diafiltrationsspalt abgeführt wird, mindestens 10 $Lm^{-2}h^{-1}$ beträgt; und der Volumenstrom der Flüssigkeit die von dem Retentatspalt abgeführt wird, mindestens 1 $Lm^{-2}h^{-1}$ beträgt. Gemäß dieser bevorzugten Ausführungsform wird der Diafiltrationsspalt mit einem hohen Volumenstrom der Flüssigkeit gespült, so dass eine zuverlässige Entlüftung gewährleistet werden kann.

Der Volumenstrom in $Lm^{-2}h^{-1}$ ist auf die verfügbare (zugängliche) Fläche des ersten Filtermaterials (in $m^2$) bezogen. Die verfügbare Fläche des ersten Filtermaterials bezeichnet die Fläche, welche zur Querstromdiafiltration zur Verfügung steht bzw. die von der Flüssigkeit durchströmt werden kann.

Gemäß einer weiteren bevorzugten Ausführungsform der vorliegenden Erfindung beträgt die Dauer von Schritt (ii) mindestens 30 Sekunden, vorzugsweise mindestens 2 Minuten, besonders bevorzugt mindestens 5 Minuten. Durch die vorstehende Mindestdauer von Schritt (ii) kann eine ausreichende Entlüftung gewährleistet werden.

Gemäß der vorliegenden Erfindung umfasst das Entlüftungsverfahren nach Schritt (ii) weiter den Schritt (iii) des Zuführens der Flüssigkeit in den Retentatspalt und in den Diafiltrationsspalt, so dass die Flüssigkeit aus dem (bereits entlüfteten) Diafiltrationsspalt in den Retentatspalt und aus dem Retentatspalt in den Permeatspalt dringt. Gemäß dieser bevorzugten Ausführungsform können nicht nur Diafiltrations- und Retentatspalt, sondern zusätzlich auch der Permeatspalt entlüftet werden. Zudem können unerwünschte Substanzen (z. B. Glycerin als Konservierungsmittel (insbesondere für die Filtermaterialien/Filtermembranen) für den Fall der vorangegangenen Einlagerung der Querstromdiafiltrationsvorrichtung; z. B. Glycerin mit 20% EtOH oder mit bis zu 1 M NaOH als Lagerlösung) vollständig entfernt werden.

Erfindungsgemäß ist bevorzugt, dass in Schritt (iii) der Volumenstrom der Flüssigkeit, die in den Retentatspalt zugeführt wird, mindestens 18 $Lm^{-2}h^{-1}$ beträgt; und der Volumenstrom der Flüssigkeit, die in den Diafiltrationsspalt zugeführt wird, mindestens 18 $Lm^{-2}h^{-1}$ beträgt. Durch entsprechend gewählte Volumenströme der Flüssigkeit kann eine ausreichende Entlüftung des Permeatspalts gewährleistet werden. Zudem ist bevorzugt, dass in Schritt (iii) der Volumenstrom der Flüssigkeit, die von dem Retentatspalt abgeführt wird, mindestens 1 $Lm^{-2}h^{-1}$, beträgt.

Die Dauer von Schritt (iii) beträgt vorzugsweise mindestens 30 Sekunden, besonders bevorzugt mindestens vier Minuten, noch bevorzugter mindestens 10 Minuten, wodurch eine ausreichende Entlüftung des Permeatspalts erzielt werden kann.

In einer bevorzugten Ausführungsform der vorliegenden Erfindung umfasst das Entlüftungsverfahren einen Schritt (i') des Bereitstellens mindestens einer weiteren Querstromdiafiltrationseinheit, wobei die in Schritt (i) bereitgestellte Querstromdiafiltrationseinheit mit der mindestens einen in Schritt (i') bereitgestellten Querstromdiafiltrationseinheit in Serie oder parallel geschaltet sein kann. Auch eine derartige Anordnung kann mit dem erfindungsgemäßen Verfahren entlüftet werden, wobei die mindestens eine weitere Querstromdiafiltrationseinheit so wie die in Schritt (i) bereitgestellte Querstromdiafiltrationseinheit entlüftet wird.

In einer weiteren bevorzugten Ausführungsform der vorliegenden Erfindung umfasst die in Schritt (i) bereitgestellte Querstromdiafiltrationseinheit eine vor- und/oder nachgeschaltete Querstromfiltrationseinheit, wie nachstehend in Bezug auf das erfindungsgemäße Querstromdiafiltrationsverfahren genauer erläutert wird.

In einem weiteren Aspekt betrifft die vorliegende Erfindung ein Querstromdiafiltrationsverfahren, umfassend das vorstehende Verfahren zum Entlüften einer Querstromdiafiltrationseinheit; sowie die Schritte (iv) Zuführen einer Speiseflüssigkeit in den Retentatspalt; (v) Abführen des Retentats aus dem Retentatspalt; (vi) Zuführen eines Diafiltrationsmediums in den Diafiltrationsspalt; und (vii) Abführen des Permeats aus dem Permeatspalt. Vorzugsweise werden die Schritte (v) bis (vii) gleichzeitig durchgeführt, was als "prozessieren" bezeichnet wird.

In dem erfindungsgemäßen Querstromdiafiltrationsverfahren wird die Querstromdiafiltrationseinheit entlüftet. Dadurch wird die volle Leistungsfähigkeit der Querstromdiafiltrationseinheit genutzt. Zudem kann das Problem eines verfrühten Filtrationsabbruchs aufgrund des Überschreitens des zulässigen Maximalbetriebsdruckes durch das erfindungsgemäße Entlüften vermieden werden.

In Bezug auf den Zeitpunkt des Entlüftungsverfahrens im Querstromdiafiltrationsverfahren der vorliegenden Erfindung besteht keine besondere Einschränkung. Vorzugsweise wird das Entlüftungsverfahren zu Beginn des Querstromdiafiltrationsverfahrens durchgeführt. Alternativ dazu kann die Durchführung der Schritte (iv) bis (vii) (d. h. das Prozessieren) unterbrochen werden, um eine Zwischenentlüftung der Querstromdiafiltrationseinheit durchzuführen und danach die Schritte (iv) bis (vii) wieder aufzunehmen. Eine Zwischenentlüftung kann beispielsweise dann erfolgen, wenn der Druck im Diafiltrationsspalt einen vorbestimmten Grenzwert überschreitet. Der Druck im Diafiltrationsspalt kann beispielsweise durch einen Drucksensor bestimmt werden. Alternativ kann mithilfe eines Sensors zum Detektieren von Luftblasen festgestellt werden, ob und in welchem Ausmaß im Diafiltrationsspalt Luftblasen vorliegen, und bei Überschreiten eines vorbestimmten Grenzwertes eine Zwischenentlüftung durchgeführt werden. Besonders bevorzugt wird das Entlüftungsverfahren vor den Schritten (iv) bis (vii) durchgeführt, noch bevorzugter ist, dass das Entlüftungsverfahren sowohl vor den Schritten (iv) bis (vii) durchgeführt wird als auch mindestens eine Zwischenentlüftung vorgenommen wird.

Schritt (iv) des erfindungsgemäßen Querstromdiafiltrationsverfahrens kann grundsätzlich mit den gleichen Mitteln wie Schritt (ii) des Entlüftungsverfahrens durchgeführt werden, beispielsweise mit Hilfe einer Speiseflüssigkeitszuführpumpe, mit der Maßgabe, dass anstelle der Flüssigkeit eine Speiseflüssigkeit in den Retentatspalt zugeführt wird.

In dem erfindungsgemäßen Querstromdiafiltrationsverfahren können Fluide wie Flüssigkeiten, Emulsionen, Suspensionen, Getränke, wie Bier, Wein, Saft, Wasser, Milch und Molke, Bierwürze, Brauch- und Abwasser, Lösungen im Pharma-, Medizin-, Kosmetik-, Chemie-, Biotechnologie-, Gentechnik-, Umweltschutz- und Laborbereich als Speiseflüssigkeit eingesetzt und diafiltriert werden. Sie können zur Wertstoffgewinnung, Stofftrennung beispielweise von Makromolekülen und Biomolekülen, zur Entpyrogenisierung und Sterilisierung von Lösungen, zur Abtrennung von Schadstoffen aus Fluiden, für die (Dia)filtration und Aufkonzentrierung biologischer Lösungen, für die Abtrennung von Mikroorganismen, wie Bakterien, Hefen, Viren und von Zellbestandteilen, für die Entsalzung von Proteinlösungen und anderen biologischen Medien verwendet werden. Dabei kann die erfindungsgemäß zu gewinnende Zusammensetzung sowohl das Retentat als auch das Permeat sein, wobei gegebenenfalls das Permeat bzw. das Retentat verworfen wird.

Besonders vorteilhaft kann das erfindungsgemäße Querstromdiafiltrationsverfahren zur Filtration, Diafiltration, Aufkonzentrierung (Reduktion des Lösungsmittel- bzw. Wassergehaltes), und/oder Änderung der Ionenzusammensetzung (z. B. Entsalzung oder Pufferaustausch) einer Lösung, vorzugsweise einer Proteinlösung, verwendet werden.

Für die im Retentatspalt befindliche Flüssigkeit können die Begriffe (Speise)flüssigkeit und Retentat gleichbedeutend verwendet werden.

Gemäß einer weiteren bevorzugten Ausführungsform der vorliegenden Erfindung wird die Querstromdiafiltrationseinheit vor Schritt (iv) durch Spülen mit einer Sanitierungslösung sanitisiert. Beim Sanitisieren wird die Anzahl der gegebenenfalls in der Querstromdiafiltrationseinheit vorhandenen Keime auf ein Minimum reduziert. Vorzugsweise ist das Sanitisieren ein Sterilisieren. Beim Sterilisieren erfolgt eine derartige Abtötung der Keime, dass sie nach dem Sterilisieren nicht mehr nachgewiesen werden können. Die Sanitisierungslösung kann beispielsweise eine wässrige NaOH-Lösung sein. Vorzugsweise beträgt die Konzentration von NaOH in der wässrigen NaOH-Lösung 0,1 bis 1 Mol/L. Die Dauer des Sanitisierungsschritts unterliegt keiner besonderen Einschränkung und beträgt vorzugsweise 10 Minuten bis 4 Stunden, besonders bevorzugt 30 bis 60 Minuten.

Der Sanitisierungsschritt kann ein Einwirkenlassen der Sanitisierungslösung ( "soaking") einschließen. Dabei wird der Spülvorgang zeitweilig unterbrochen, um die Wirkung der Sanitisierungslösung zu erhöhen und/oder die Menge der benötigten Sanitisierungslösung zu minimieren.

Gemäß einer bevorzugten Ausführungsform der vorliegenden Erfindung wird im optionalen Sanitisierungsschritt die Sanitisierungslösung in den Retentatspalt zugeführt und aus dem Diafiltrationsspalt, dem Retentatspalt und dem Permeatspalt abgeführt. Hierbei betragen der Volumenstrom der Sanitisierungslösung, die in den Retentatspalt zugeführt wird, vorzugsweise mindestens 10 Lm$^{-2}$h$^{-1}$; der Volumenstrom der Sanitisierungslösung, die von dem Diafiltrationsspalt abgeführt wird, mindestens 1 Lm$^{-2}$h$^{-1}$, der Volumenstrom der Sanitisierungslösung, die von dem Retentatspalt abgeführt wird, mindestens 1 Lm$^{-2}$h$^{-1}$, und der Volumenstrom der Sanitisierungslösung, die von dem Permeatspalt abgeführt wird, mindestens 1 Lm$^{-2}$h$^{-1}$.

Gemäß einer weiteren bevorzugten Ausführungsform der vorliegenden Erfindung wird im optionalen Sanitisierungsschritt die Sanitisierungslösung in den Diafiltrationsspalt und in den Retentatspalt zugeführt und aus dem Retentatspalt und dem Permeatspalt abgeführt. Hierbei betragen vorzugsweise der Volumenstrom der Sanitisierungslösung, die in den Retentatspalt zugeführt wird, mindestens 5 Lm$^{-2}$h$^{-1}$; der Volumenstrom der Sanitisierungslösung, die in den Diafiltrationsspalt zugeführt wird, mindestens 5 Lm$^{-2}$h$^{-1}$, der Volumenstrom der Sanitisierungslösung, die von dem Retentatspalt abgeführt wird, mindestens 1 Lm$^{-2}$h$^{-1}$, und der Volumenstrom der Sanitisierungslösung, die von dem Permeatspalt abgeführt wird, mindestens 1 Lm$^{-2}$h$^{-1}$.

Gemäß einer besonders bevorzugten Ausführungsform der vorliegenden Erfindung wird die Querstromdiafiltrationseinheit vor Schritt (iv) mit einer Spüllösung gespült. Sofern eine Sanitisierung durchgeführt wird, erfolgt das Spülen vorzugsweise nach dem Sanitisieren. Die Spüllösung unterliegt keiner besonderen Einschränkung. Vorzugsweise wird als Spüllösung Wasser oder eine wässrige Pufferlösung verwendet.

Vorzugsweise wird im Spülschritt die Spüllösung in den Retentatspalt zugeführt und aus dem Diafiltrationsspalt, dem Retentatspalt und dem Permeatspalt abgeführt. Hierbei betragen der Volumenstrom der Spüllösung, die in den Retentatspalt zugeführt wird, vorzugsweise mindestens 20 Lm$^{-2}$h$^{-1}$, der Volumenstrom der Spüllösung, die von dem Diafiltrationsspalt abgeführt wird, mindestens 5 Lm$^{-2}$h$^{-1}$, der Volumenstrom der Spüllösung, die von dem Retentatspalt abgeführt wird, mindestens 5 Lm$^{-2}$h$^{-1}$, und der Volumenstrom der Spüllösung, die von dem Permeatspalt abgeführt wird, mindestens 5 Lm$^{-2}$h$^{-1}$.

Weiterhin ist es bevorzugt, dass im optionalen Spülschritt die Spüllösung in den Diafiltrationsspalt und in den Retentatspalt zugeführt und von dem Retentatspalt und dem Permeatspalt abgeführt wird. Hierbei betragen der Volumenstrom der Spüllösung, die in den Retentatspalt zugeführt wird, vorzugsweise mindestens 5 Lm$^{-2}$h$^{-1}$; der Volumenstrom der Spüllösung, die in den Diafiltrationsspalt zugeführt wird, mindestens 5 Lm$^{-2}$h$^{-1}$, der Volumenstrom der Spüllösung, die von dem Retentatspalt abgeführt wird, mindestens 5 Lm$^{-2}$h$^{-1}$, und der Volumenstrom der Spüllösung, die von dem Permeatspalt abgeführt wird, mindestens 5 Lm$^{-2}$h$^{-1}$.

Erfindungsgemäß ist weiterhin bevorzugt, dass in Schritt (iv) zunächst die Speiseflüssigkeit in den Retentatspalt zugeführt wird, ohne Schritte (v) bis (vii) durchzuführen, bis ein vorbestimmter Transmembrandruck im Retentatspalt erreicht wird. Dieser Schritt kann als "Anfahren" bezeichnet werden. Nach dem Anfahren (Erreichen des vorbestimmten Transmembrandrucks) werden die Schritte (iv) bis (vii) parallel (zeitgleich) durchgeführt. Der Schritt des Anfahrens führt dazu, dass bereits zu Beginn der Querstromdiafiltration im Retentatspalt weitgehend Gleichgewichtsbedingungen vorliegen. Anstelle die Speiseflüssigkeit zuzuführen, bis ein bestimmter Transmembrandruck erreicht wird, kann als Anfahrschritt das Retentat so lange im Retentatspalt im Kreis gefahren werden, bis Gleichgewichtsbedingungen erreicht sind. "Im Kreis fahren" bedeutet hierbei, dass die Speiseflüssigkeit in den Retentatspalt zugeführt wird, das Retentat aus dem Retentatspalt abgeführt wird und als das aus dem Retentatspalt abgeführte Retentat als Speiseflüssigkeit dem Retentatspalt zugeführt wird. Das Erreichen von Gleichgewichtsbedingungen kann beispielsweise dadurch festgestellt werden, dass ein bestimmter im Retentatspalt gemessener Parameter sich nicht mehr ändert. Der Parameter kann beispielsweise mit einem UV-Sensor gemessen werden.

Der Transmembrandruck TMP oder $p_{TMP}$ kann als das arithmetische Mittel des Drucks am Einlass für die Speiseflüssigkeit $p_{in}^{ret}$ und des Drucks am Auslass für das Retentat $p_{out}^{ret}$, abzüglich des Drucks am Auslass für das Permeat $p_{out}^{per}$ definiert werden ($p_{TMP} = \frac{1}{2}(p_{in}^{ret} + p_{out}^{ret}) - p_{out}^{per}$). Die Drücke $p_{in}^{ret}$, $p_{out}^{ret}$ und $p_{out}^{per}$ können beispielsweise durch am Einlass für die Speiseflüssigkeit, am Auslass für das Retentat beziehungsweise am Auslass für das Permeat angebrachte Sensoren gemessen werden.

Wie bereits vorstehend erwähnt, ist es bevorzugt, dass im erfindungsgemäßen Querstromdiafiltrationsverfahren die Schritte (iv) bis (vii) zumindest zeitweise parallel (zugleich) durchgeführt werden, was als "Prozessieren" bezeichnet werden kann.

Der Prozessierschritt wird gemäß einer bevorzugten Ausführungsform derart betrieben, dass der jeweilige Volumenstrom der Speiseflüssigkeit, des Retentats, des Diafiltrationsmediums und des Permeats weitgehend konstant ist. "Weitgehend" bedeutet in diesem Zusammenhang, dass das Verhältnis des jeweiligen höchsten Volumenstroms zum jeweiligen niedrigsten Volumenstrom höchstens 1,10, vorzugsweise höchstens 1,05, besonders bevorzugt höchstens 1,01 beträgt.

Gemäß einer weiteren bevorzugten Ausführungsform der vorliegenden Erfindung wird der Prozessierschritt so betrieben, dass der Transmembrandruck weitgehend konstant bleibt. "Weitgehend" bedeutet in diesem Zusammenhang, dass das Verhältnis des höchsten TMPs zum niedrigsten TMP höchstens 1,10, vorzugsweise höchstens 1,05, besonders bevorzugt höchstens 1,01 beträgt. Ein Absinken des TMPs kann beispielsweise durch eine erhöhte Zufuhr der Speiseflüssigkeit ausgeglichen werden, ein Ansteigen des TMPs durch eine verminderte Zufuhr der Speiseflüssigkeit. Darüber hinaus kann eine Anpassung des TMPs durch Regelung des Retentatauslassventils erreicht werden: Bei Erhöhung des Durchflusses durch weiteres Öffnen des Retentatauslassventils sinkt der TMP, durch weiteres Schließen des Retentatauslassventils steigt er an. Entsprechend kann eine Anpassung des TMPs durch Regelung einer gegebenenfalls vorhandenen Retentatabführpumpe erfolgen.

Um den Diafiltrationsfaktor konstant zu halten, wird bei einer entsprechenden Anpassung vorzugsweise der Volumenstrom des zugeführten Diafiltrationsmediums entsprechend angeglichen. Der Diafiltrationsfaktor ist das Verhältnis des Volumenstroms des zugeführten Diafiltrationsmediums zum Volumenstrom der zugeführten Speiseflüssigkeit.

Das verwendete Diafiltrationsmedium unterliegt keiner besonderen Einschränkung. Geeignet ist grundsätzlich jedes Fluid, wobei Wasser und wässrige Salzlösungen bevorzugt sind. Besonders bevorzugt ist als Diafiltrationsmedium eine wässrige Pufferlösung, wobei dieselben Puffer wie für die Flüssigkeit von Schritt (ii) geeignet sind.

An die Schritte (iv) bis (vii) des erfindungsgemäßen Diafiltrationsverfahrens schließt sich vorzugsweise ein Schritt (viii) der Rückgewinnung der Speiseflüssigkeit (Produktrückgewinnung) an. Hierzu kann die Querstromdiafiltrationseinheit mit einem Rückgewinnungsfluid gespült werden. Das Rückgewinnungsfluid unterliegt keiner besonderen Einschränkung. Geeignet ist grundsätzlich jedes Fluid. Zum Beispiel kann das Rückgewinnungsfluid ein Gas wie Stickstoff oder Argon sein. Vorzugsweise ist das Rückgewinnungsfluid eine Rückgewinnungsflüssigkeit, z. B. ein Öl oder Polyethylenglykol, wobei Wasser und wässrige Salzlösungen bevorzugte Rückgewinnungsflüssigkeiten darstellen. In Schritt (viii) wird vorzugsweise die Rückgewinnungsflüssigkeit in den Retentatspalt zugeführt und aus dem Retentatspalt abgeführt. Der Volumenstrom in den Retentatspalt beträgt in Schritt (viii) vorzugsweise mindestens 1 Lm$^{-2}$h$^{-1}$.

Auf die Schritte (iv) bis (vii) (und gegebenenfalls (viii)) des erfindungsgemäßen Querstromdiafiltrationsverfahrens folgt vorzugsweise ein Reinigungsschritt (ix). Für den Reinigungsschritt gelten die vorstehenden Ausführungen in Bezug auf den Sanitisierungschritt entsprechend.

Vorzugsweise als letzter Schritt (x) des erfindungsgemäßen Querstromdiafiltrationsverfahrens kann die Querstromdiafiltrationsvorrichtung entleert werden. Im Entleerungsschritt wird vorzugsweise ein Gas in den Diafiltrationsspalt und/oder in den Retentatspalt zugeführt, bis keine Flüssigkeit mehr aus dem Retentatspalt und dem Permeatspalt abgeführt werden kann. Sofern eine Querstromdiafiltrationsvorrichtung mit Diafiltrations-, Speiseflüssigkeits-, und Retentatpumpe sowie ggfs. Retentatauslassventil verwendet wird, können für Schritt (x) das Retentatauslassventil geöffnet und die Diafiltrations- und die Retentatpumpe mit einem Volumenstrom von jeweils mindestens 18 Lm$^{-2}$h$^{-1}$ betrieben werden. Dabei wird vorzugsweise die Diafiltrationspumpe nur betrieben, solange der Diafiltrationsdruck weniger als 1,5 bar beträgt. Der Diafiltrationsdruck kann beispielsweise mit einem am Einlass für das Diafiltrationsmedium angebrachten Sensor gemessen werden.

Erfindungsgemäß kann in dem erfindungsgemäßen Querstromdiafiltrationsverfahren vor dem Schritt (iv) ein Schritt des Aufkonzentrierens oder Verdünnens der Speiseflüssigkeit erfolgen, wobei die verdünnte oder konzentrierte Speiseflüssigkeit in Schritt (iv) in den Retentatspalt zugeführt wird. Vorzugsweise ist der vorstehende Schritt ein Schritt des Aufkonzentrierens der Speiseflüssigkeit. Der Schritt des Aufkonzentrierens der Speiseflüssigkeit vor Schritt (iv) wird vorzugsweise mit einer Querstromfiltrationseinheit durchgeführt. Die Querstromfiltrationseinheit umfasst einen Retentatspalt und einen Permeatspalt, wobei Retentat- und Permeatspalt durch ein (vorzugsweise flächiges) Filtermaterial voneinander abgegrenzt werden. Die Querstromfiltrationseinheit kann mit dem Retentatspalt der Querstromdiafiltrationsvorrichtung über eine Umlenkvorrichtung, wie beispielsweise in DE 10 2018 004 909 A1 beschrieben, verbunden sein (siehe Figuren 1, 5, 13, 14). Alternativ können die Querstromfiltrationseinheit und die Querstromdiafiltrationseinheit getrennt voneinander angeordnet sein, beispielsweise in jeweils einem Filterhalter. Darüber hinaus können die Querstromfiltrationseinheit und die Querstromdiafiltrationseinheit zusammen in einem gemeinsamen Gehäuse angeordnet werden.

Erfindungsgemäß kann in dem erfindungsgemäßen Querstromdiafiltrationsverfahren nach dem Schritt (v) ein Schritt des Aufkonzentrierens oder Verdünnens des Retentats erfolgen, wobei hierzu das in Schritt (v) aus dem Retentatspalt abgeführte Retentat verwendet wird. Vorzugsweise ist der vorstehende Schritt ein Schritt des Aufkonzentrierens des Retentats. Der Schritt des Aufkonzentrierens des Retentats nach Schritt (v) wird vorzugsweise mit einer Querstromfiltrationseinheit durchgeführt. In Bezug auf diese Querstromfiltrationseinheit gelten die vorstehenden Ausführungen in Bezug auf den Schritt des Aufkonzentrierens oder Verdünnens der Speiseflüssigkeit vor dem Schritt (iv) entsprechend.

Im erfindungsgemäßen Querstromdiafiltrationsverfahren kann das Prozessieren mehrmals hintereinander durchgeführt werden, gegebenenfalls in den in den Schritten (i) und (i') bereitgestellten Querstromdiafiltrationseinheiten, die parallel und/oder in Serie geschaltet sein können.

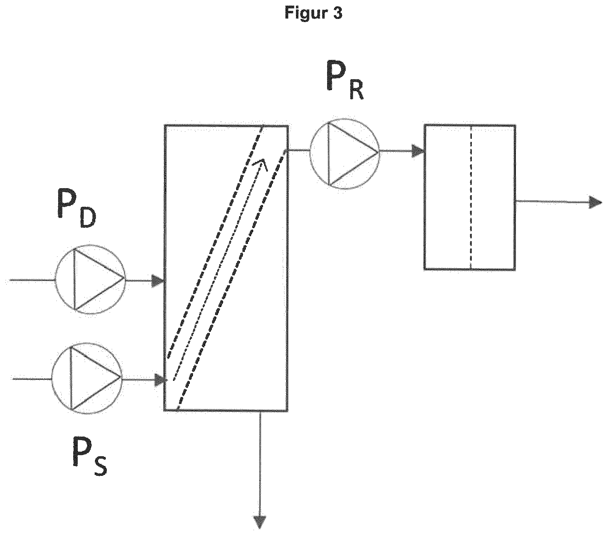

Weiterhin kann/können das Retentat bzw. das Permeat nach Schritt (v) bzw. (vii) weiterbehandelt werden, beispielsweise durch einen Filtrationsschritt, vorzugsweise einen Sterilfiltrationsschritt (siehe Figur 3).

In einem weiteren Aspekt betrifft die vorliegende Erfindung eine Querstromdiafiltrationseinheit mit Diafiltrationsspalt, Retentatspalt und Permeatspalt, wobei ein erstes (vorzugsweise flächiges) Filtermaterial den Diafiltrationsspalt und den Retentatspalt voneinander abgrenzt und ein zweites (vorzugsweise flächiges) Filtermaterial den Retentatspalt und den Permeatspalt voneinander abgrenzt, und der Diafiltrationsspalt fluidleitend mit einer Pumpe verbunden ist und die Pumpe in zwei Richtungen betrieben werden kann. Der Retentatspalt ist fluidleitend mit mindestens einem Einlass für eine Speiseflüssigkeit und mit mindestens einem Auslass für das Retentat verbunden.

die Querstromdiafiltrationseinheit weist weiter eine Speiseflüssigkeitspumpe oder ein Ventil zum Zuführen der Speiseflüssigkeit auf. Die erfindungsgemäße Querstromdiafiltrationseinheit kann mithilfe der in zwei Richtungen betreibbaren Diafiltrationspumpe besonders effizient entlüftet werden.

Die vorstehenden Ausführungen in Bezug auf das erfindungsgemäße Entlüftungsverfahren sowie das erfindungsgemäße Querstromdiafiltrationsverfahren und die nachstehenden Ausführungen in Bezug auf die erfindungsgemäße Querstromdiafiltrationseinheit sind wechselseitig aufeinander anwendbar.

Wie bereits vorstehend erwähnt, kann die erfindungsgemäße Querstromdiafiltrationseinheit beispielsweise die Form eines Flachfiltermoduls, Wickelmoduls oder Hohlfasermoduls aufweisen, wobei die erfindungsgemäße Querstromdiafiltrationseinheit vorzugsweise ein Flachfiltermodul ist.

Gemäß einer bevorzugten Ausführungsform der vorliegenden Erfindung ist die Diafiltrationspumpe eine Schlauchpumpe. Vorzugsweise ist die Schlauchpumpe als Pumpe mit mindestens 3 definierten Schlauchdimensionen ausgebildet, sodass über die Schlauchdurchmesser im erfindungsgemäßen Querstromdiafiltrationsverfahren derjeweilige Volumenstrom des zugeführten Diafiltrationsmediums, der zugeführten Speiseflüssigkeit sowie des abgeführten Retentats und des abgeführten Permeats eingestellt werden können. Wie in Figur 15 gezeigt, kann eine Schlauchpumpe in zwei Richtungen betrieben werden.

Über die Diafiltrationspumpe hinaus weist die erfindungsgemäße Querstromdiafiltrationseinheit eine Speiseflüssigkeitspumpe oder ein Ventil zum Zuführen der Speiseflüssigkeit auf. Vorzugsweise weist die erfindungsgemäße Querstromdiafiltrationseinheit weiter eine Retentatpumpe zum Abführen des Retentats und/oder eine Permeatpumpe zum Abführen des Permeats auf. Eine oder mehrere der Pumpen kann durch ein Ventil ersetzt werden. Beispielsweise kann die Querstromdiafiltrationseinheit eine Speiseflüssigkeitspumpe und ein Retentatventil oder ein Speiseflüssigkeitsventil und eine Retentatpumpe aufweisen. Entsprechend kann die Querstromdiafiltrationseinheit anstelle einer Permeatpumpe ein Permeatventil aufweisen. Mit Hinblick auf geeignete Pumpen und Ventile gelten die vorstehenden Ausführungen entsprechend.

Gemäß einer bevorzugten Ausführungsform weist die Querstromdiafiltrationseinheit mindestens einen Luftfilter auf, der fluidleitend mit dem Diafiltrationsspalt verbunden ist. Vorzugsweise ist der Luftfilter ein Sterilfilter. Durch den Luftfilter kann beim Entlüften Luft entweichen.

Wie vorstehend ausgeführt, kann grundlegend gemäß der vorliegenden Erfindung zunächst der Retentatspalt entlüftet werden, indem Flüssigkeit (z.B. Puffer, Speiseflüssigkeit) in den Retentatspalt gepumpt wird, und ein Teil der Flüssigkeit aus dem Auslass für das Retentat gelassen wird, bis keine Luftblasen mehr aus dem Retentatspalt austreten.

Danach kann der Diafiltrationsspalt entlüftet werden, indem Flüssigkeit in den gefüllten Retentatspalt gepumpt wird, und ein Teil der Flüssigkeit aus dem Diafiltrationsspalt gepumpt wird, bis keine Luftblasen mehr aus dem Diafiltrationsspalt austreten.

Beide Schritte können auch gleichzeitig durchgeführt werden, so lange, bis aus dem Retentatspalt und dem Diafiltrationsspalt keine Luftblasen mehr austreten.

Gemäß der vorliegenden Erfindung kann der Ablauf des Entlüftungsverfahrens automatisiert werden. Die Regelung und der Ablauf der einzelnen Entlüftungsschritte können über mehrere Parameter unabhängig oder auch mit deren Kombination erfolgen.

Die Regelung kann erfindungsgemäß z.B. auf einer Luftblasendetektierung basieren. Die Luftblasendetektierung kann z.B. über eine Ultraschalldetektierung oder nach thermoelektrischem Prinzip erfolgen. Ultraschallsensoren zur Messung von Volumenströmen sind oft schon in der Lage, Luftblasen zu detektieren. Der Entlüftungprozess wird dann mindestens so lange fortgeführt, bis keine Luftblasen mehr aus dem Diafiltrationsspalt und dem Retentatspalt austreten. Gegebenenfalls muss ein Zeitintervall gewählt werden, über dessen Dauer keine Luftblasen mehr detektiert werden sollen, damit der Prozess bei hinreichender Entlüftung beendet wird.

Des Weiteren kann die Regelung erfindungsgemäß alternativ über eine Volumendetektierung erfolgen. Wenn das Leervolumen der Querstromdiafiltrationseinheit und der angeschlossenen Schlauchverbindungen und Komponenten bekannt ist, kann die Regelung über das eingesetzte Volumen der Entlüftungsflüssigkeit (z.B. Puffer, Speiseflüssigkeit) erfolgen. Dazu führt man mindestens so viel Entlüftungsflüssigkeit in die Querstromdiafiltrationseinheit und die angeschlossenen Schlauchverbindungen und Komponenten, bis das Leervolumen komplett gefüllt ist. Da die Luft nicht in einem Stück entweicht, muss das Volumen der Entlüftungsflüssigkeit typischerweise größer sein als das Leervolumen.

Darüber hinaus kann die Regelung erfindungsgemäß alternativ über eine Zeitmessung erfolgen. Dazu müssen die Volumenströme in die Querstromdiafiltrationseinheit und aus der Querstromdiafiltrationseinheit bekannt sein. Damit lässt sich berechnen, wie lange die Entlüftungsflüssigkeit in den Retentatspalt einströmen muss, bis das Leervolumen der Querstromdiafiltrationseinheit und der angeschlossenen Schlauchverbindungen und Komponenten komplett gefüllt ist. Da die Luft nicht in einem Stück entweicht, muss die Abbruchzeit typischerweise länger sein als der aus dem Leervolumen berechnete Wert.

Da die Volumendetektierung und die Zeitmessung indirekte Methoden zur Ermittlung des Abbruchbruchkriteriums Entlüftung sind, wird erfindungsgemäß die Methode der direkten Luftblasendetektierung bevorzugt.

Bezugszeichenliste

P$_D$    Diafiltrationspumpe
Ps    Speiseflüssigkeitszuführpumpe
P$_R$    Retentatabführpumpe
LF    Sensor zur Messung der Leitfähigkeit
F    Sensor zur Messung des Volumenstroms
P    Sensor zur Druckmessung

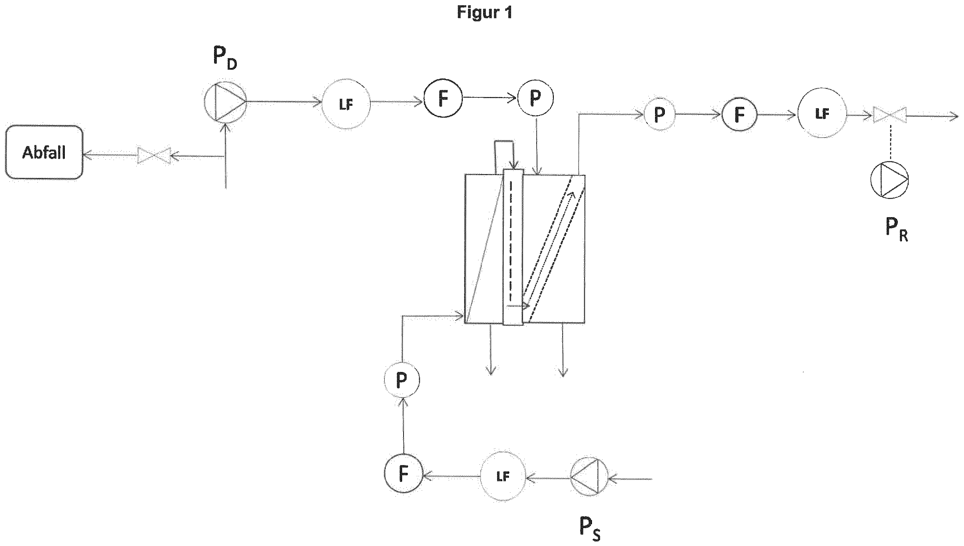

Figur 1 zeigt eine erfindungsgemäße Querstromdiafiltrationseinheit mit Diafiltrationspumpe, die in zwei Richtungen betrieben werden kann, wobei der Querstromdiafiltrationseinheit zur Aufkonzentrierung der Speiseflüssigkeit eine Querstromfiltrationseinheit vorgeschaltet ist, wobei die Querstromfiltrationseinheit durch eine Umlenkvorrichtung mit der Querstromdiafiltrationseinheit verbunden ist. Der Abzweig vor der Diafiltrationspumpe, der zum Abfall führt, kann zur Entlüftung über ein Ventil geöffnet werden.

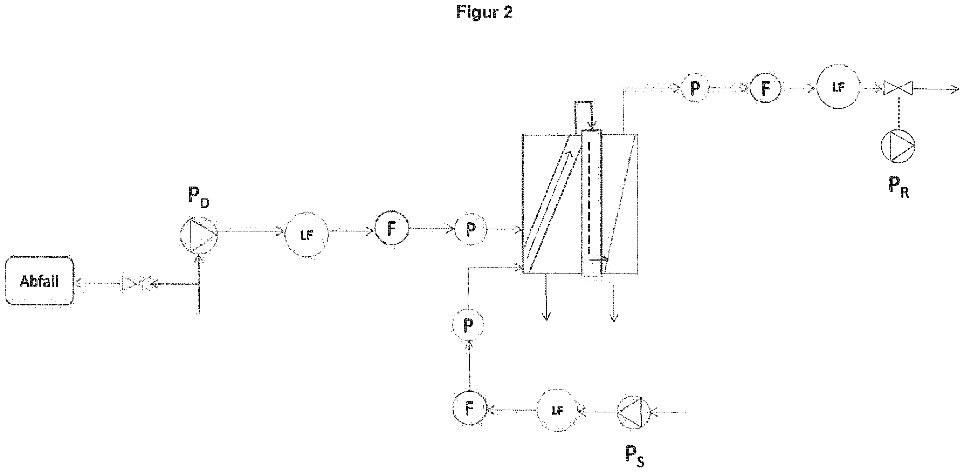

Figur 2 zeigt eine erfindungsgemäße Querstromdiafiltrationseinheit mit Diafiltrationspumpe, die in zwei Richtungen betrieben werden kann, wobei der Querstromdiafiltrationseinheit zur Aufkonzentrierung der Speiseflüssigkeit eine Querstromfiltrationseinheit nachgeschaltet ist, wobei die Querstromfiltrationseinheit durch eine Umlenkvorrichtung mit der Querstromdiafiltrationseinheit verbunden ist. Der Abzweig vor der Diafiltrationspumpe, der zum Abfall führt, kann zur Entlüftung über ein Ventil geöffnet werden.

Figur 3 zeigt eine erfindungsgemäße Querstromdiafiltrationseinheit mit Diafiltrationspumpe, die in zwei Richtungen betrieben werden kann, wobei der Querstromdiafiltrationseinheit zum Filtrieren des Retentats eine Sterilfiltrationseinheit nachgeschaltet ist.

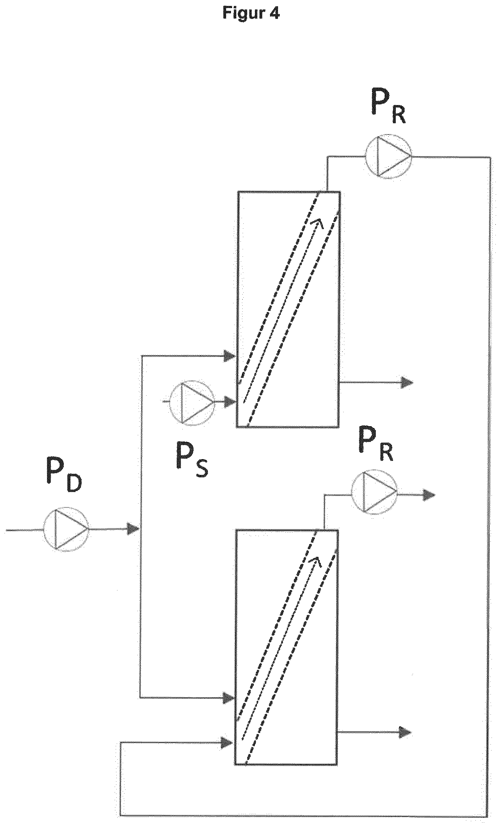

Figur 4 zeigt eine erfindungsgemäße Anordnung von in Serie geschalteten Diafiltrationseinheiten, wobei das Retentat der oberen Einheit als Speiseflüssigkeit der unteren Einheit verwendet wird. Die Diafiltration ist hierbei parallelgeschaltet. Das heißt, das Diafiltrationsmedium wird aus einer einzigen Quelle mit nur einer Diafitrationspumpe zugeführt.

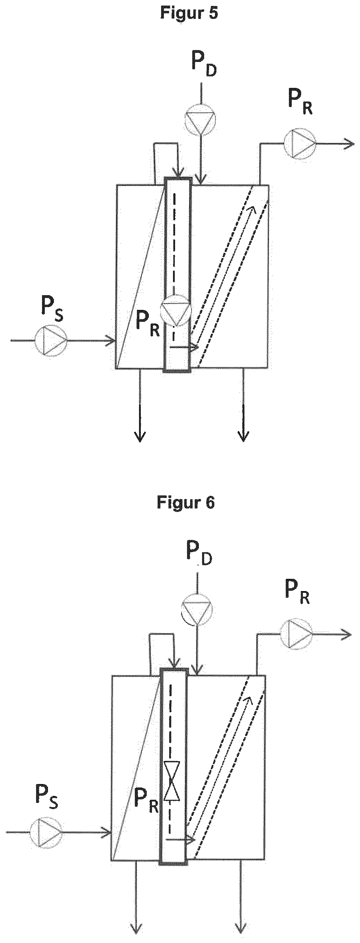

Figur 5 zeigt eine erfindungsgemäße Querstromdiafiltrationseinheit mit vorgeschalteter Querstromfiltrationseinheit und Umlenkvorrichtung mit Pumpe.

Figur 6 zeigt eine erfindungsgemäße Querstromdiafiltrationseinheit mit vorgeschalteter Querstromfiltrationseinheit und Umlenkvorrichtung mit Ventil.

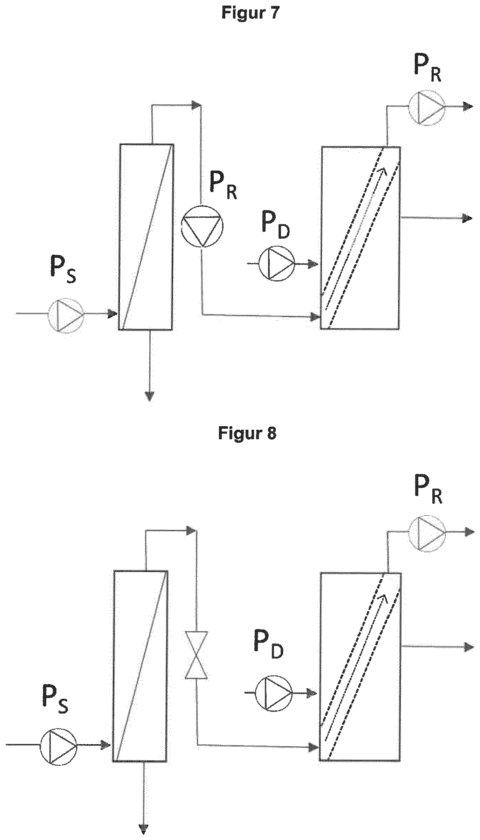

Figur 7 zeigt eine erfindungsgemäße Querstromdiafiltrationseinheit mit vorgeschalteter Querstromfiltrationseinheit und Verbindung zwischen der Querstromfiltrationseinheit und der Querstromdiafiltrationseinheit mit Pumpe. Die Querstromfiltrationseinheit und die Querstromdiafiltrationseinheit können mithilfe von Haltern fixiert werden.

Figur 8 zeigt eine erfindungsgemäße Querstromdiafiltrationseinheit mit vorgeschalteter Querstromfiltrationseinheit und Verbindung zwischen der Querstromfiltrationseinheit und der Querstromdiafiltrationseinheit mit Ventil. Die Querstromfiltrationseinheit und die Querstromdiafiltrationseinheit können mithilfe von Haltern fixiert werden.

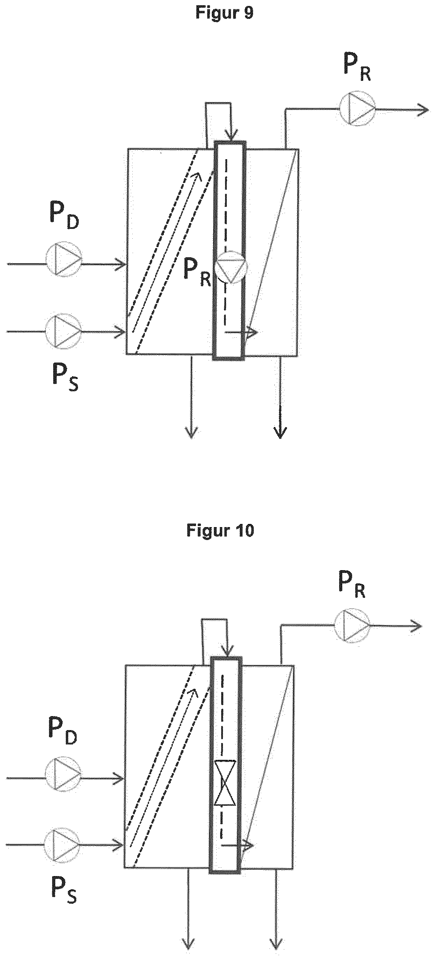

Figur 9 zeigt eine erfindungsgemäße Querstromdiafiltrationseinheit mit nachgeschalteter Querstromfiltrationseinheit und Umlenkvorrichtung mit Pumpe.

Figur 10 zeigt eine erfindungsgemäße Querstromdiafiltrationseinheit mit nachgeschalteter Querstromfiltrationseinheit und Umlenkvorrichtung mit Ventil.

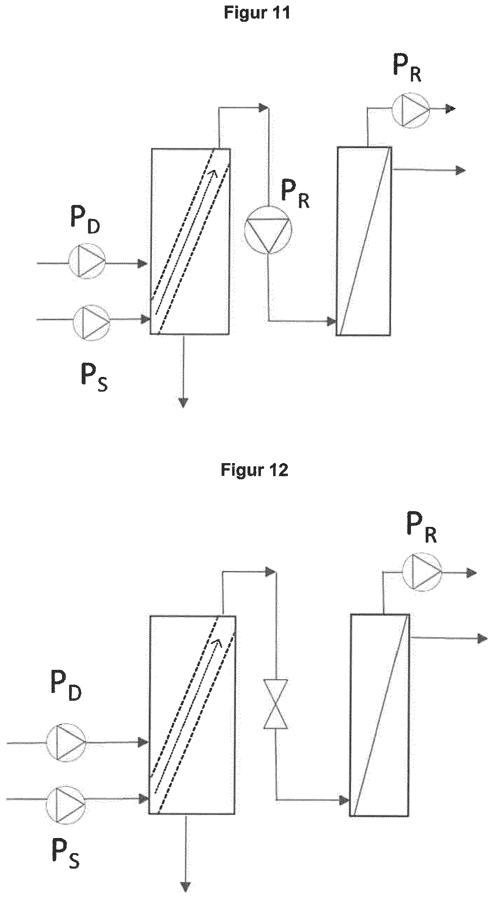

Figur 11 zeigt eine erfindungsgemäße Querstromdiafiltrationseinheit mit nachgeschalteter Querstromfiltrationseinheit und Verbindung zwischen der Querstromdiafiltrationseinheit und der Querstromfiltrationseinheit mit Pumpe. Die Querstromfiltrationseinheit und die Querstromdiafiltrationseinheit können mithilfe von Haltern fixiert werden.

Figur 12 zeigt eine erfindungsgemäße Querstromdiafiltrationseinheit mit nachgeschalteter Querstromfiltrationseinheit und Verbindung zwischen der Querstromdiafiltrationseinheit und der Querstromfiltrationseinheit mit Ventil. Die Querstromfiltrationseinheit und die Querstromdiafiltrationseinheit können mithilfe von Haltern fixiert werden.

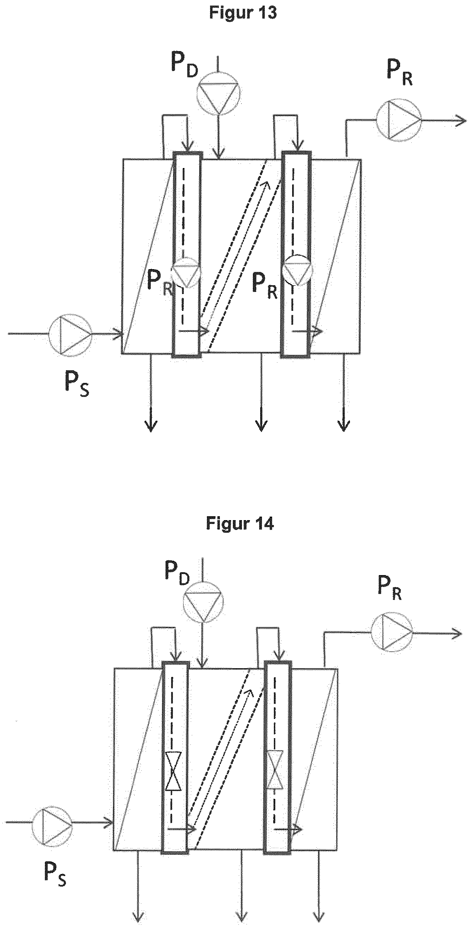

Figur 13 zeigt eine erfindungsgemäße Querstromdiafiltrationseinheit mit jeweils einer vor- und nachgeschalteten Querstromfiltrationseinheit und Umlenkvorrichtungen mit Pumpe.

Figur 14 zeigt eine erfindungsgemäße Querstromdiafiltrationseinheit mit jeweils einer vor- und nachgeschalteten Querstromfiltrationseinheit und Umlenkvorrichtungen mit Ventil.

Figur 15 zeigt eine in zwei Richtungen betreibbare Schlauchpumpe. Die beiden möglichen Pumprichtungen sind durch Pfeile angezeigt.

**Patentansprüche**

1. Verfahren zum Entlüften einer Querstromdiafiltrationseinheit, umfassend die Schritte in der angegebenen Reihenfolge

    (i) Bereitstellen einer Querstromdiafiltrationseinheit mit Diafiltrationsspalt, Retentatspalt und Permeatspalt, wobei ein erstes Filtermaterial den Diafiltrationsspalt und den Retentatspalt voneinander abgrenzt und ein zweites Filtermaterial den Retentatspalt und den Permeatspalt voneinander abgrenzt;
    (ii) Zuführen einer Flüssigkeit in den Retentatspalt, so dass die Flüssigkeit in einer Flussrichtung durch den Retentatspalt strömt und durch das erste Filtermaterial in den Diafiltrationsspalt dringt, um den Retentatspalt und den Diafiltrationsspalt mit der Flüssigkeit zu befüllen und zu entlüften, und
    (iii) Zuführen der Flüssigkeit in den Retentatspalt und in den Diafiltrationsspalt, so dass die Flüssigkeit aus dem Diafiltrationsspalt in den Retentatspalt und aus dem Retentatspalt in den Permeatspalt dringt;
    wobei die in Schritt (i) bereitgestellte Querstromdiafiltrationseinheit eine Pumpe aufweist, der Diafiltrationsspalt fluidleitend mit der Pumpe verbunden ist und die Pumpe in zwei Richtungen betrieben werden kann,
    der Retentatspalt fluidleitend mit mindestens einem Einlass für eine Speiseflüssigkeit und mit mindestens einem Auslass für das Retentat verbunden ist,
    die Querstromdiafiltrationseinheit weiter eine Speiseflüssigkeitspumpe oder ein Ventil zum Zuführen der Speiseflüssigkeit aufweist; und in Schritt (ii) die Flüssigkeit von der Pumpe aus dem Diafiltrationsspalt gepumpt wird.

2. Verfahren nach Anspruch 1, wobei in Schritt (ii) die Flussrichtung der Flüssigkeit im Retentatspalt einen Winkel von mehr oder weniger als 90° zur Richtung der Schwerkraft einnimmt.

3. Verfahren nach Anspruch 1 oder 2, wobei in Schritt (ii) die Flüssigkeit so in den Retentatspalt zugeführt wird, dass die Flüssigkeit durch das erste Filtermaterial in den Diafiltrationsspalt und durch das zweite Filtermaterial in den Permeatspalt dringt, um den Retentatspalt, den Diafiltrationsspalt und den Permeatspalt mit der Flüssigkeit zu befüllen und zu entlüften.

4. Verfahren nach einem der Ansprüche 1 bis 3, wobei in Schritt (ii)

    der Volumenstrom der Flüssigkeit, die in den Retentatspalt zugeführt wird, größer ist als der Volumenstrom der Flüssigkeit, die vom Diafiltrationsspalt abgeführt wird, und
    der Volumenstrom der Flüssigkeit, die vom Diafiltrationsspalt abgeführt wird, größer ist als der Volumenstrom der Flüssigkeit, die vom Retentatspalt abgeführt wird.

5. Querstromdiafiltrationsverfahren, umfassend das Verfahren zum Entlüften einer Querstromdiafiltrationseinheit nach einem der Ansprüche 1 bis 4; sowie die Schritte

    (iv) Zuführen einer Speiseflüssigkeit in den Retentatspalt;
    (v) Abführen des Retentats aus dem Retentatspalt;
    (vi) Zuführen eines Diafiltrationsmediums in den Diafiltrationsspalt; und
    (vii) Abführen des Permeats aus dem Permeatspalt.

6. Querstromdiafiltrationsverfahren nach Anspruch 5, worin die Querstromdiafiltrationseinheit vor Schritt (iv) durch Spülen mit einer Sanitisierungslösung sanitisiert wird.

7. Querstromdiafiltrationsverfahren nach Anspruch 5 oder 6, worin die Querstromdiafiltrationseinheit vor Schritt (iv) und gegebenenfalls nach dem Sanitisieren mit einer Spüllösung gespült wird.

8. Querstromdiafiltrationseinheit mit Diafiltrationsspalt, Retentatspalt und Permeatspalt,

wobei ein erstes Filtermaterial den Diafiltrationsspalt und den Retentatspalt voneinander abgrenzt und ein zweites Filtermaterial den Retentatspalt und den Permeatspalt voneinander abgrenzt,
der Diafiltrationsspalt fluidleitend mit einer Pumpe verbunden ist, und die Pumpe in zwei Richtungen betrieben werden kann, und
der Retentatspalt fluidleitend mit mindestens einem Einlass für eine Speiseflüssigkeit und mit mindestens einem Auslass für das Retentat verbunden ist, und
die Querstromdiafiltrationseinheit weiter eine Speiseflüssigkeitspumpe oder ein Ventil zum Zuführen der Speiseflüssigkeit aufweist.

**Claims**

1. Method for degassing a cross-flow diafiltration unit, comprising, in the order specified, the steps of:

   (i) providing a cross-flow diafiltration unit having a diafiltration channel, a retentate channel and a permeate channel, a first filter material delimiting the diafiltration channel from the retentate channel, and a second filter material delimiting the retentate channel from the permeate channel,
   (ii) feeding a liquid into the retentate channel so that the liquid flows in a flow direction through the retentate channel and penetrates through the first filter material into the diafiltration channel, whereby the retentate channel and the diafiltration channel are filled with and degassed by the liquid, and
   (iii) feeding the liquid into the retentate channel and into the diafiltration channel so that the liquid passes out of the diafiltration channel into the retentate channel and out of the retentate channel into the permeate channel;
   wherein the cross-flow diafiltration unit provided in step (i) has a pump, the diafiltration channel is connected in a fluid conducting manner to the pump, and the pump can be operated bi-directionally,
   the retentate channel is connected in a fluid conducting manner to at least one inlet for a feed liquid and to at least one outlet for the retentate,
   the cross-flow diafiltration unit additionally has a feed liquid pump or a valve for feeding in the feed liquid; and
   in step (ii), the liquid is pumped out of the diafiltration channel by the pump.

2. Method according to claim 1,
   wherein, in step (ii), the flow direction of the liquid in the retentate channel assumes an angle of more than or less than 90° to the direction of gravity.

3. Method according to claim 1 or 2,
   wherein, in step (ii), the liquid is fed into the retentate channel so that the liquid penetrates through the first filter material into the diafiltration channel and through the second filter material into the permeate channel, whereby the retentate channel, the diafiltration channel and the permeate channel are filled with and degassed by the liquid.

4. Method according to any one of claims 1 to 3,

   wherein, in step (ii),
   the volume flow of the liquid that is fed into the retentate channel is greater than the volume flow of the liquid that is discharged from the diafiltration channel, and
   the volume flow of the liquid that is discharged from the diafiltration channel is greater than the volume flow of the liquid that is discharged from the retentate channel.

5. Cross-flow diafiltration method, comprising:

   the method for degassing a cross-flow diafiltration unit according to any one of claims 1 to 4; and the steps
   (iv) feeding a feed liquid into the retentate channel;
   (v) discharging the retentate from the retentate channel;
   (vi) feeding a diafiltration medium into the diafiltration channel; and
   (vii) discharging the permeate from the permeate channel.

6. Cross-flow diafiltration method according to claim 5, wherein the cross-flow diafiltration unit is sanitized before step (iv) by rinsing with a sanitizing solution.

7. Cross-flow diafiltration method according to claim 5 or 6,
   wherein the cross-flow diafiltration unit is rinsed with a rinsing solution before step (iv) and optionally after the sanitizing.

8. Cross-flow diafiltration unit comprising a diafiltration channel, a retentate channel and a permeate channel,

   wherein a first filter material delimits the diafiltration channel from the retentate channel, and a second filter material delimits the retentate channel from the permeate channel,
   the diafiltration channel is connected in a fluid conducting manner to a pump, and the pump can be operated bi-directionally, and

the retentate channel is connected in a fluid conducting manner to at least one inlet for a feed liquid and to at least one outlet for the retentate, and

the cross-flow diafiltration unit additionally has a feed liquid pump or a valve for feeding in the feed liquid.

**Revendications**

1. Procédé de désaération d'une unité de diafiltration à flux tangentiel, comprenant les étapes dans l'ordre indiqué

   (i) fourniture d'une unité de diafiltration à flux tangentiel avec une fente de diafiltration, une fente de rétentat et une fente de perméat, dans lequel un premier matériau filtrant délimite la fente de diafiltration et la fente de rétentat l'une par rapport à l'autre et un second matériau filtrant délimite la fente de rétentat et la fente de perméat l'une par rapport à l'autre;
   (ii) amenée d'un liquide dans la fente de rétentat de sorte que le liquide circule dans une direction de flux à travers la fente de rétentat et pénètre dans la fente de diafiltration à travers le premier matériau filtrant pour remplir et désaérer la fente de rétentat et la fente de diafiltration avec le liquide, et
   (iii) amenée du liquide dans la fente de rétentat et dans la fente de diafiltration de sorte que le liquide pénètre depuis la fente de diafiltration jusque dans la fente de rétentat et depuis la fente de rétentat jusque dans la fente de perméat;
   dans lequel l'unité de diafiltration à flux tangentiel fournie à l'étape (i) présente une pompe, la fente de diafiltration est reliée avec la pompe de façon à conduire du liquide, et la pompe peut être exploitée dans deux directions,
   la fente de rétentat est reliée de façon à conduire du liquide avec au moins une admission pour un liquide d'alimentation et avec au moins une évacuation pour le rétentat,
   l'unité de diafiltration à flux tangentiel présente en outre une pompe de liquide d'alimentation ou une vanne pour l'amenée du liquide d'alimentation; et
   à l'étape (ii) le liquide est pompé par la pompe depuis la fente de diafiltration.

2. Procédé selon la revendication 1,
   dans lequel à l'étape (ii) la direction de flux du liquide dans la fente de rétentat forme un angle de plus ou moins 90° par rapport à la direction de la pesanteur.

3. Procédé selon la revendication 1 ou 2,
   dans lequel à l'étape (ii) le liquide est amené dans la fente de rétentat de sorte que le liquide pénètre dans la fente de diafiltration à travers le premier matériau filtrant et dans la fente de rétentat à travers le second matériau filtrant pour remplir et désaérer la fente de rétentat, la fente de diafiltration et la fente de perméat avec le liquide.

4. Procédé selon l'une des revendications 1 à 3,

   dans lequel à l'étape (ii)
   le débit volumétrique du liquide qui est amené dans la fente de rétentat est supérieur au débit volumétrique du liquide qui est évacué de la fente de diafiltration, et
   le débit volumétrique du liquide qui est évacué de la fente de diafiltration est supérieur au débit volumétrique du liquide qui est évacué de la fente de rétentat.

5. Procédé de diafiltration à flux tangentiel, comprenant

   le procédé de désaération d'une unité de diafiltration à flux tangentiel selon l'une des revendications 1 à 4;
   ainsi que les étapes de
   (iv) amenée d'un liquide d'alimentation dans la fente de rétentat;
   (v) évacuation du rétentat hors de la fente de rétentat;
   (vi) amenée d'un milieu de diafiltration dans la fente de diafiltration; et
   (vii) évacuation du perméat hors de la fente de perméat.

6. Procédé de diafiltration à flux tangentiel selon la revendication 5,
   dans lequel l'unité de diafiltration à flux tangentiel est assainie avant l'étape (iv) par rinçage avec une solution d'assainissement.

7. Procédé de diafiltration à flux tangentiel selon la revendication 5 ou 6,
   dans lequel l'unité de diafiltration à flux tangentiel est rincée avec une solution de rinçage avant l'étape (iv) et le cas échéant après l'assainissement.

8. Unité de diafiltration à flux tangentiel comprenant une fente de diafiltration, une fente de rétentat et une fente de perméat,

   dans laquelle un premier matériau filtrant délimite la fente de diafiltration et la fente de rétentat l'une par rapport à l'autre et un second matériau filtrant délimite la fente de rétentat et la fente de perméat l'une par rapport à l'autre;
   la fente de diafiltration est reliée avec une pompe de façon à conduire du liquide, et la pompe peut être exploitée dans deux directions, et

la fente de rétentat est reliée de façon à conduire du liquide avec au moins une admission pour un liquide d'alimentation et avec au moins une évacuation pour le rétentat, et

l'unité de diafiltration à flux tangentiel présente en outre une pompe de liquide d'alimentation ou une vanne pour l'amenée du liquide d'alimentation.

Figur 1

Figur 2

EP 4 037 799 B1

Figur 3

Figur 4

**Figur 5**

**Figur 6**

**Figur 7**

**Figur 8**

**Figur 9**

**Figur 10**

**Figur 11**

**Figur 12**

## Figur 13

## Figur 14

Figur 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2005258100 A1
- DE 102016004115 A1
- DE 102018004909 A1

**In der Beschreibung aufgeführte Nicht-Patentliteratur**

- Characterization of porous membranes via porometry. **A. SHRESTHA.** Mechanical Engineering Graduate Theses & Dissertations. University of Colorado at Boulder, 2012, 38
- *Journal of Membrane Science,* 2011, vol. 372, 66-74
- **R. DÄVILA.** *Characterization of ultra and nanofiltration commercial filters by liquid-liquid displacement porosimetry,* 2013